# EUROPEAN PATENT APPLICATION

(11) **EP 1 749 994 A2**
(43) Date of publication of application: **07.02.2007**
(21) Application number: 06118263.0
(22) Date of filing: 01.08.2006
(51) Int. Cl.: F02C 7/22, F02C 7/232

(54) **Method and apparatus for adding a secondary fluid flow to a gas turbine engine fuel line**

(30) Priority: 01.08.2005 US 193334
(71) Applicant: Honeywell International Inc., Morristown, New Jersey 07962 (US)
(72) Inventor: Shelby, Jeffery Dugan, South Bend, IN 46628 (US); Futa Jr, Paul W., North Liberty, IN 46554 (US)
(74) Representative: Haley, Stephen

(57) **Abstract**

A gas turbine engine fuel system (10) that includes a fuel line, a pressurizing valve (14) in the fuel line having a burn fuel outlet (16) to a burn fuel line (18) providing burn fuel to the engine (20) and a control fuel outlet (22) to a control fuel line (24) providing pressure for controlling an engine system (26), the pressurizing valve (14)being shiftable between a closed position blocking fuel flow to the burn fuel line (18) and to the control fuel line (24) and a second position, and a secondary flow valve (30) having a first end (44, 64) in fluid communication with the burn fuel line (18) downstream of the pressurizing valve (14) and a second end (64, 66) in fluid communication with the control fuel line (24) downstream of the pressurizing valve (14), the secondary flow valve (30) controlling the addition of a secondary fluid flow from a secondary fluid line (32) to the control fuel line (24), the secondary flow valve (30) substantially preventing the secondary flow from reaching the secondary flow valve first end (44, 64). Also a method of adding a secondary fluid flow to a control fuel line (24).

## Description

The present application claims the benefit of U.S. Provisional Application No. 60/608,514, filed September 10, 2004, the entire contents of which are hereby incorporated by reference.

The present invention is directed toward a method and apparatus for adding a flow of secondary fluid to a fuel line in a gas turbine engine providing control pressure to a controlled system, and more specifically, toward a method and apparatus for adding a secondary fluid, which may comprise for example, washed and heated fuel, to a control pressure fuel line downstream of a pressurizing valve in a manner that substantially prevents unintended mixing of the secondary fluid and a burn fuel flow to the gas turbine engine.

Gas turbine engines, such as those used in aircraft, include various valves and mechanisms for providing a controlled flow of fuel to a combustion chamber. It is also known in such engines to use fuel pressures and pressure differences to drive various actuators and other devices. This "muscle" pressure is often generated in a fuel line separate from a main burn fuel line which may sometimes be referred to as a control fuel line.

Gas turbine engines include a variety of filters for filtering fuel in different passageways. Burn fuel need not be as clean as the fuel that is used for various engine controls. It is therefore known to provide additional filtering for fuel that will be used in a control fuel line. If the control fuel is to be used in locations where freezing might be a problem, it is also known to provide a heated control fuel supply. Such filtered and heated fuel may be referred to as washed heated fuel.

Fuel supplied to a combustion chamber must be accurately metered to control the power developed by an engine. Many gas turbine engines use a metering valve to accurately meter a fuel supply and a pressurizing valve for increasing the metered fuel supply to a given pressure. The pressurizing valve generally exhibits what may be referred to as "drip tight" shutoff. In other words, closing the pressurizing valve substantially completely stops the flow of fuel therethrough. This may be contrasted with valves that use matched clearances to restrict fuel flow therepast but which are known and intended to leak at least a small amount.

When a secondary fuel flow, such as a washed and/or heated fuel flow is to be added to a control fuel flow, it is generally added upstream of a metering valve. Thus, this secondary flow may safely leak back to the main fuel system, be metered, and used as part of the burn fuel flow. However, control systems have recently been developed that require a control fuel pressure to be developed by the pressurizing valve that pressurizes a burn fuel flow. This arrangement requires that any secondary fuel flow added to the control fuel flow be added downstream of the pressurizing valve. Under these conditions, leakage from the secondary fuel flow is likely to reach the burn fuel after it has been metered and thus change the amount of fuel that reaches the engines. It would therefore be desirable to provide a method and apparatus for adding a secondary fuel flow to a control fuel line in a manner that will not substantially affect the volume of burn fuel supplied to a combustion chamber.

These problems and others are addressed by the present invention, a first aspect of which comprises a gas turbine engine fuel system that includes a fuel line and a pressurizing valve in the fuel line having a burn fuel outlet to a burn fuel line providing burn fuel to the engine and a control fuel outlet to a control fuel line providing pressure for controlling an engine system. The pressurizing valve is shiftable between a closed position blocking fuel flow to the burn fuel line and to the control fuel line and a second position. A secondary flow valve is provided that has a first end in fluid communication with the burn fuel line downstream of the pressurizing valve and a second end in fluid communication with the control fuel line downstream of the pressurizing valve. The secondary flow valve controls the addition of a secondary fluid from a secondary fluid line to the control fuel line and substantially prevents the secondary fluid from reaching the secondary flow valve first end.

Another aspect of the invention comprises, in a gas turbine engine fuel system that includes a pressurizing valve providing burn fuel to a burn fuel line at a first pressure and control fuel to a control fuel line at a second pressure, a method of adding a secondary fluid to the control fuel line downstream of the pressurizing valve. The method involves providing a first passageway connecting the burn fuel line to the control fuel line and providing a second passageway connecting a secondary fluid line to the first passageway. A movable spool is provided in the first passageway for substantially blocking the first passageway and selectively blocking the second passageway. The spool is moved from a first position blocking the first passageway and the second passageway to a second position blocking the first passageway and allowing communication between the second passageway and the control fuel line.

A further aspect of the invention comprises, in a gas turbine engine fuel system including a pressurizing valve providing burn fuel to a burn fuel line at a first pressure and control fuel to a control fuel line at a second pressure, a method that involves providing a washed, heated fuel flow to the control fuel line downstream of the pressurizing valve and substantially preventing the washed heated fuel flow from mixing with the burn fuel before mixing with the control fuel.
In the Drawings

These aspects and features of the invention and others will be better understood after a reading of the following detailed description of an embodiment of the invention in connection with the following drawings wherein:

Figure 1 is a block diagram schematically illustrating a system according to an embodiment of the present invention;

Figure 2 illustrates, somewhat schematically, an embodiment of the present invention using a first type of secondary flow valve;

Figure 3 illustrates, somewhat schematically, an embodiment of the present invention using a different type of secondary flow valve; and

Figure 4 is a flow chart illustrating a method according to an embodiment of the present invention.

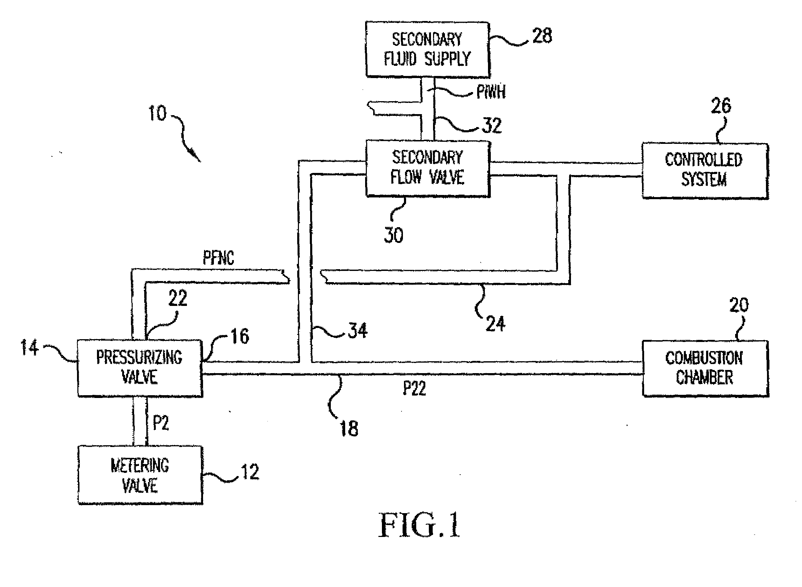

Referring now to the drawings, wherein the showings are for the purpose of illustrating preferred embodiments of the invention only and not for the purpose of limiting same, Figure 1 shows a fuel system 10 that includes a metering valve 12 providing a metered supply of fuel to a pressurizing valve 14 at a pressure P2. Pressurizing valve 14 has a first outlet 16 to burn fuel line 18 which provides a burn fuel flow to combustion chamber 20 at a pressure P22. Pressurizing valve 14 has a second outlet 22 to a control fuel line 24 and provides fuel at a pressure PFNC to a controlled system 26 through control fuel line 24.

A secondary fluid, such as washed and heated fuel, is supplied from secondary fuel supply 28 to secondary flow valve 30 through a secondary fluid line 32 at a pressure P1WH. Secondary flow valve 30 controllably adds this secondary fluid to control fuel line 24. Secondary flow valve 30 is also in fluid communication with burn fuel line 18 via passage 34, and the pressure in the burn fuel line 18 affects the position of secondary flow valve 30.

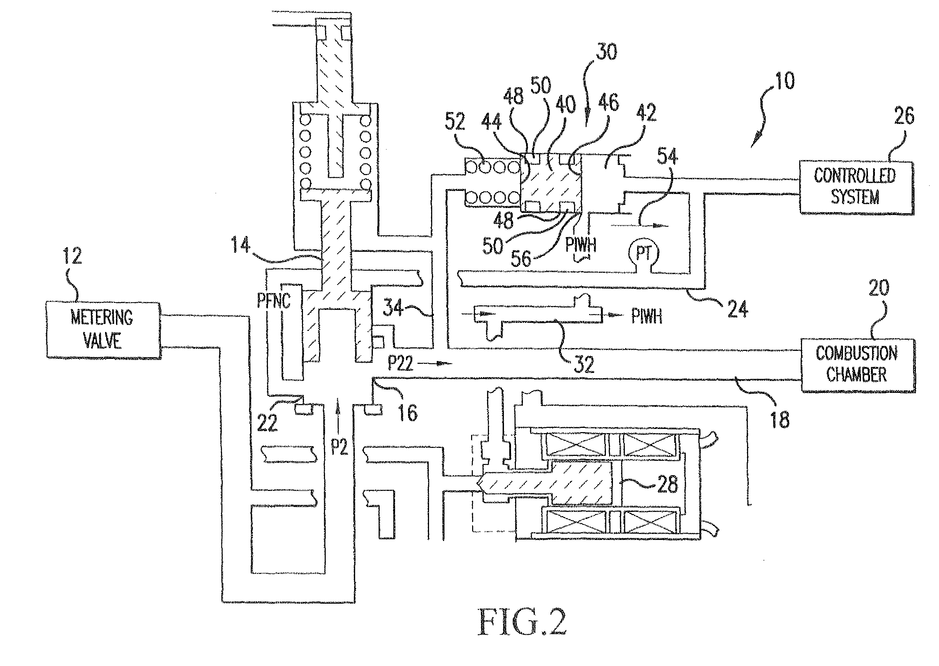

An embodiment of the present invention is illustrated in Figure 2 which shows a specific structure of secondary flow valve 30. Valve 30 comprises a spool 40 mounted for sliding movement in a chamber 42 which connects passage 34 to control fuel line 24. Spool 40 comprises a first end 44 and a second end 46 and first and second annular grooves 48 each containing a seal 50 such as an O-ring. A spring 52 biases spool 40 in the direction of arrow 54 - to the right in Figure 2. Seals 50 substantially prevent fluid from passage 34 from traveling past spool 40 in the direction of arrow 54 and substantially prevent fluid adjacent second end 46 of spool 40 from reaching first end 44 of spool 40. Secondary fuel line 32 enters chamber 42 through an opening 56 that is blocked and exposed by the movement of spool 40.

In operation, pressurizing valve 14 opens and fluid begins to flow through second outlet 22 into control fuel line 24. As pressurizing valve 30 opens further, fuel also begins to flow through first outlet 16 into burn fuel line 18. Pressure PFNC in control fuel line 24 is greater than pressure P22 in burn fuel line 18 and therefore holds spool 40 in the position shown in Figure 2 with spring 52 compressed. In this position, spool 40 uncovers opening 56 and allows fluid in secondary fluid line 32, which is at a higher pressure than pressure PFNC, to enter chamber 42 and mix with fuel in the control fuel line 24. Seals 50 prevent the fluid from secondary fuel line 32 from reaching the first end 44 of spool 40 and mixing with the fuel in passageway 34.

When pressurizing valve 14 is closed, no further fluid flows through first and second outlets 16 and 22 and the pressures in burn fuel line 18 and control fuel line 24 begin to drop. When the pressures drop below a given level, the biasing force exerted by spring 52 forces spool 40 in the direction of arrow 54 and covers opening 56 to stop further fluid flow from secondary fuel line 32 through opening 56. In this manner, drip-tight shutoff of the secondary fuel flow is provided. The opening of pressurizing valve 14 returns spool 40 to the position illustrated in Figure 2.

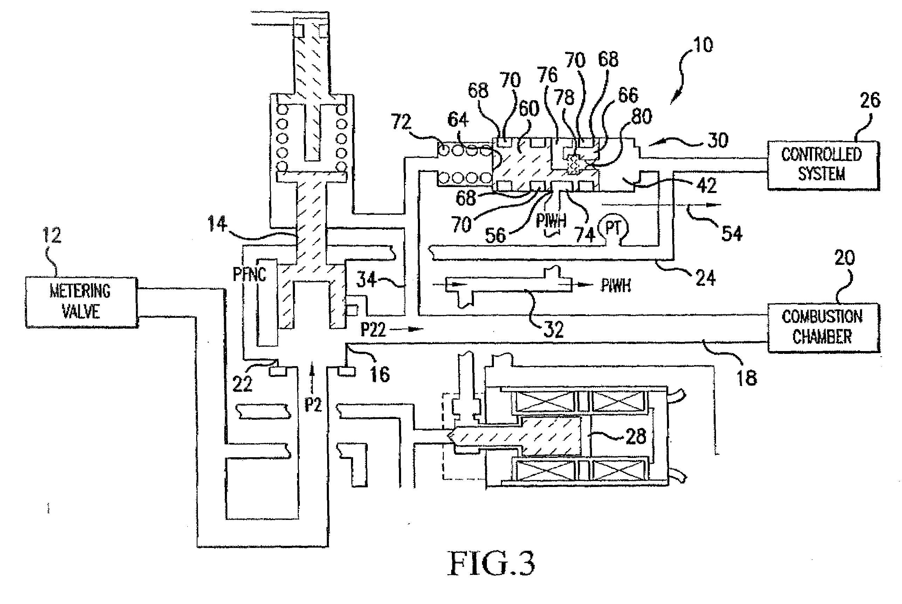

An embodiment of the invention using a different spool 60 is illustrated in Figure 3 wherein elements common to the previous Figures are identified with like reference numerals. In this embodiment, valve 30 comprises a spool 60 mounted for sliding movement in chamber 42 which connects passage 34 to control fuel line 24. Spool 60 comprises a first end 64 and a second end 66 and three annular sealing grooves 68 each containing a seal 70 such as an O-ring. A spring 72 biases spool 60 in the direction of arrow 54 - to the right in Figure 3. Spool 60 includes an annular flow groove 74 between a pair of annular sealing grooves 68 that communicates with a central passage 76 which includes a filter 78 and a bleed 80. When spool 60 is positioned in chamber 42 so that flow annular groove 74 is aligned with opening 56, fluid from secondary fluid line 32 enters flow annular groove 74 and passes through central passage 76, filter 78 and bleed 80 and enters control fuel line 24. This arrangement allows for accurate control of the amount of fuel flowing from fluid pathway 32 to control fuel line 24. When the pressures in control fuel line 24 and burn fuel line 18 fall below a given level, spring 72 moves spool 40 in the direction of arrow 54 to close opening 56 and substantially prevent fuel from fluid from flowing from secondary fluid pathway 32. In this way, fluid from secondary fluid pathway 32 and from control fuel line 24 is substantially prevented from reaching first end 64 of spool 60. Seals 70 also substantially prevent fluid from passage 34 from traveling past spool 60 in the direction of arrow 54.

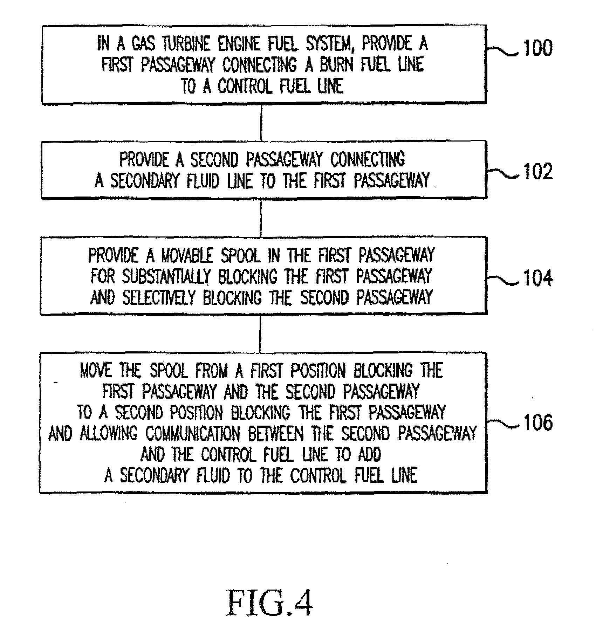

Figure 4 illustrates a method of adding a secondary fluid to a control fuel line in a gas turbine engine fuel system that involves providing a first passageway connecting the burn fuel line to the control fuel line at a step 100, providing a second passageway connecting a secondary fluid line to the first passageway at a step 102, providing a movable spool in the first passageway for substantially blocking the first passageway and selectively blocking the second passageway at a step 104 and moving the spool from a first position blocking the first passageway and the second passageway to a second position backing the first passageway and allowing communication between the second passageway and the control fuel line at a step 106.

The present invention has been described herein in terms of preferred embodiments. Obvious additions and modifications to these embodiments will become apparent to those skilled in the relevant arts upon a reading of the foregoing disclosure. It is intended that all such additions and modifications comprises a part of the present invention to the extent they fall within the scope of the several claims appended hereto.

## Claims

1. A gas turbine engine fuel system (10) comprising:
a fuel line;
a pressurizing valve (14) in the fuel line having a burn fuel outlet (16) to a burn fuel line (18) providing burn fuel to the engine (20) and a control fuel outlet (22) to a control fuel line (24) providing pressure for controlling an engine system (26), said pressurizing valve (14) being shiftable between a closed position blocking fuel flow to said burn fuel line (18) and to said control fuel line (24) and a second position; and
a secondary flow valve (30) having a first end (44, 64) in fluid communication with said burn fuel line (18) downstream of said pressurizing valve (14) and a second end (46, 66) in fluid communication with said control fuel line (24) downstream of said pressurizing valve (14), said secondary flow valve (30) controlling the addition of a secondary fluid flow from a secondary fluid line (32) to said control fuel line (24), said secondary flow valve (30) substantially preventing said secondary flow from reaching said secondary flow valve first end (44, 64).

2. The gas turbine engine fuel system (10) of claim 1 wherein said secondary flow valve (30) comprises a spool (40, 60) shiftable between a first position allowing communication between said secondary fluid line (32) and said control fuel line (24) and a second position substantially preventing communication between said secondary fluid line (32) and said control fuel line (24).

3. The gas turbine engine fuel system (10) of claim 2 wherein said spool (60) includes a first annular channel (74) alignable with said secondary fluid line (32) and at least one second annular channel (68) containing an O-ring (70).

4. The gas turbine engine fuel system of claim 2 including biasing means (52, 72) for biasing said spool (40, 60) toward said second position.

5. The gas turbine engine fuel system (10) of claim 2 including a spring (52, 72) for shifting said spool (40, 60) to said second position when said first pressure and said second pressure drop below a predetermined level.

6. The gas turbine engine fuel system (10) of claim 3 wherein said spool (40, 60) includes a central channel (76) including a bleed (80), said central channel (76) communicating with said first annular channel (74).

7. In a gas turbine engine fuel system (10) including a pressurizing valve (14) providing burn fuel to a burn fuel line (18) at a first pressure and control fuel to a control fuel line (24) at a second pressure, a method of adding a secondary fluid to the control fuel line (24) downstream of the pressurizing valve (14) comprising the steps of:
providing a first passageway (34) connecting the burn fuel line (18) to the control fuel line (24);
providing a second passageway (32) connecting a secondary fluid line to the first passageway (34);
providing a movable spool (40, 60) in the first passageway (34) for substantially blocking the first passageway (34) and selectively blocking the second passageway (32); and
moving the spool (40, 60) from a first position blocking the first passageway (34) and the second passageway (32) to a second position blocking the first passageway (34) and allowing communication between the second passageway (32) and the control fuel line (24).

8. The method of claim 7 including the additional step of shifting the movable spool (40, 60) to the first position when the first and second pressures fall below a given level.

9. The method of claim 7 including the additional step of closing the pressurizing valve (14) to block fuel flow to the burn fuel line (18) and to the control fuel line (24).

10. The method of claim 7 including the additional steps of:
providing biasing means (52, 72) for biasing the spool (40, 60) toward the first position; and
shifting the spool (40, 60) to the first position by closing the pressurizing valve (14).
